# DEMANDE DE BREVET EUROPEEN

(11) **EP 2 724 892 A1**
(43) Date de publication de la demande: **30.04.2014**
(21) Numéro de dépôt: 13190159.7
(22) Date de dépôt: 24.10.2013
(51) Int. Cl.: B60R 5/04

(54) **Système de recouvrement d un compartiment à bagages de véhicule automobile**

(30) Priorité: 29.10.2012 FR 1260307
(71) Demandeur: CENTRE D'ETUDE ET DE RECHERCHE POUR L'AUTOMOBILE (CERA), 51100 Reims (FR)
(72) Inventeur: Brillon, Eric, 51390 Rosnay (FR)
(74) Mandataire: Sayettat, Julien Christian

(57) **Abrégé**

L'invention concerne un système (1) de recouvrement d'un compartiment à bagages de véhicule automobile, ledit système comprenant un cache bagages (2) et deux supports (3) latéraux, ledit cache bagages comprenant : un rideau (4) de masquage, un arbre (5) d'enroulement et une bavette (8) de rigidification ; deux embouts (10) latéraux sur lesquels les extrémités dudit arbre sont montées en rotation ; deux doigts (11) transversaux coulissants de verrouillage de ladite bavette montés chacun sur un embout (10) respectif, lesdits doigts étant actionnables entre une position rétractée et une position déployée ; un moyen de verrouillage prévu sur chaque bord latéral de ladite bavette ; un moyen de verrouillage complémentaire prévu en extrémité interne de chacun desdits doigts, lesdits moyens de verrouillage entrant en coopération entre eux par mise desdits doigts en position déployée pour verrouiller ladite bavette sur lesdits embouts ; chacun desdits supports étant pourvu d'un logement annexe de réception de l'extrémité externe d'un doigt (11), lorsque lesdits embouts sont montés dans lesdits logements de montage, afin de réaliser un verrouillage desdits embouts sur lesdits supports.

## Description

L'invention concerne un système de recouvrement d'un compartiment à bagages de véhicule automobile et un cache bagages d'un tel système.

Le document PCT/FR2012/050952 prévoit de réaliser un système de recouvrement d'un compartiment à bagages de véhicule automobile, ledit système comprenant un cache bagages et deux supports latéraux solidaires dudit compartiment, ledit cache bagages comprenant :
- un rideau de masquage des bagages actionnable entre une configuration déployée et une configuration escamotée,
- un arbre d'enroulement, selon un axe transversal, dudit rideau en configuration escamotée, ledit arbre étant solidaire d'un bord avant dudit rideau et étant couplé à un ressort l'actionnant en enroulement,
- une bavette de rigidification d'un bord arrière dudit rideau,
- deux embouts latéraux sur lesquels les extrémités dudit arbre sont montées en rotation,
- deux doigts transversaux coulissants de verrouillage de ladite bavette montés chacun sur un embout respectif, lesdits doigts étant actionnables entre une position rétractée, obtenue par appui desdits doigts sur lesdits supports après insertion desdits embouts dans des logements de montage prévus sur lesdits supports, et une position déployée, obtenue par retrait desdits embouts desdits logements, lesdits doigts étant actionnés vers leur position déployée par deux moyens ressort respectifs,
- un moyen de verrouillage prévu sur chaque bord latéral de ladite bavette,
- un moyen de verrouillage complémentaire prévu en extrémité interne de chacun desdits doigts,
lesdits moyens de verrouillage entrant en coopération entre eux par mise desdits doigts en position déployée pour verrouiller ladite bavette sur lesdits embouts.

Avec un tel agencement, la bavette se verrouille sur les embouts lorsque le cache bagages est démonté des supports, ce qui permet d'éviter un déroulement non souhaité du rideau, notamment quand l'utilisateur le transporte par la bavette.

Il est par ailleurs connu des systèmes de recouvrement des bagages dans lesquels les embouts et logements de montage sont pourvus de moyens de verrouillages additionnels réciproques permettant de réaliser un verrouillage des embouts sur les supports, ceci afin d'éviter tout risque de projection du cache bagages dans l'habitacle du véhicule lors d'un accident.

L'ajout de tels moyens de verrouillage additionnels entraîne une complexification du système, ce qui a un impact en termes de coût.

L'invention a pour but de pallier cet inconvénient en proposant d'intégrer en partie les moyens de verrouillage additionnels dans les moyens de verrouillage de la bavette sur les embouts.

A cet effet, et selon un premier aspect, l'invention propose un système de recouvrement d'un compartiment à bagages de véhicule automobile, ledit système comprenant un cache bagages et deux supports latéraux solidaires dudit compartiment, ledit cache bagages comprenant :
- un rideau de masquage des bagages actionnable entre une configuration déployée et une configuration escamotée,
- un arbre d'enroulement, selon un axe transversal, dudit rideau en configuration escamotée, ledit arbre étant solidaire d'un bord avant dudit rideau et étant couplé à un ressort l'actionnant en enroulement,
- une bavette de rigidification d'un bord arrière dudit rideau,
- deux embouts latéraux sur lesquels les extrémités dudit arbre sont montées en rotation,
- deux doigts transversaux coulissants de verrouillage de ladite bavette montés chacun sur un embout respectif, lesdits doigts étant actionnables entre une position rétractée, obtenue par appui desdits doigts sur lesdits supports après insertion desdits embouts dans des logements de montage prévus sur lesdits supports, et une position déployée, obtenue par retrait desdits embouts desdits logements, lesdits doigts étant actionnés vers leur position déployée par deux moyens ressort respectifs,
- un moyen de verrouillage prévu sur chaque bord latéral de ladite bavette,
- un moyen de verrouillage complémentaire prévu en extrémité interne de chacun desdits doigts, lesdits moyens de verrouillage entrant en coopération entre eux par mise desdits doigts en position déployée pour verrouiller ladite bavette sur lesdits embouts,
chacun desdits supports étant pourvu d'un logement annexe de réception de l'extrémité externe d'un doigt, lorsque lesdits embouts sont montés dans lesdits logements de montage, afin de réaliser un verrouillage desdits embouts sur lesdits supports.

Dans cette description, les termes de positionnement dans l'espace (haut, transversal, latéral, avant, arrière, inférieur, supérieur, gauche,...) sont pris en référence au système disposé en situation d'utilisation dans le véhicule.

Les extrémités « externes » des doigts sont celles qui sont à proximité des supports alors que les extrémités « internes » sont celles disposées à distance desdits supports.

Avec l'agencement proposé, le verrouillage des embouts sur les supports est réalisé par les doigts qui servent à assurer le verrouillage de la bavette sur les embouts, ce qui simplifie la réalisation du système.

Selon un deuxième aspect, l'invention propose un cache bagages d'un tel système.

D'autres particularités et avantages de l'invention apparaîtront dans la description qui suit, faite en référence aux figures jointes, dans lesquelles :

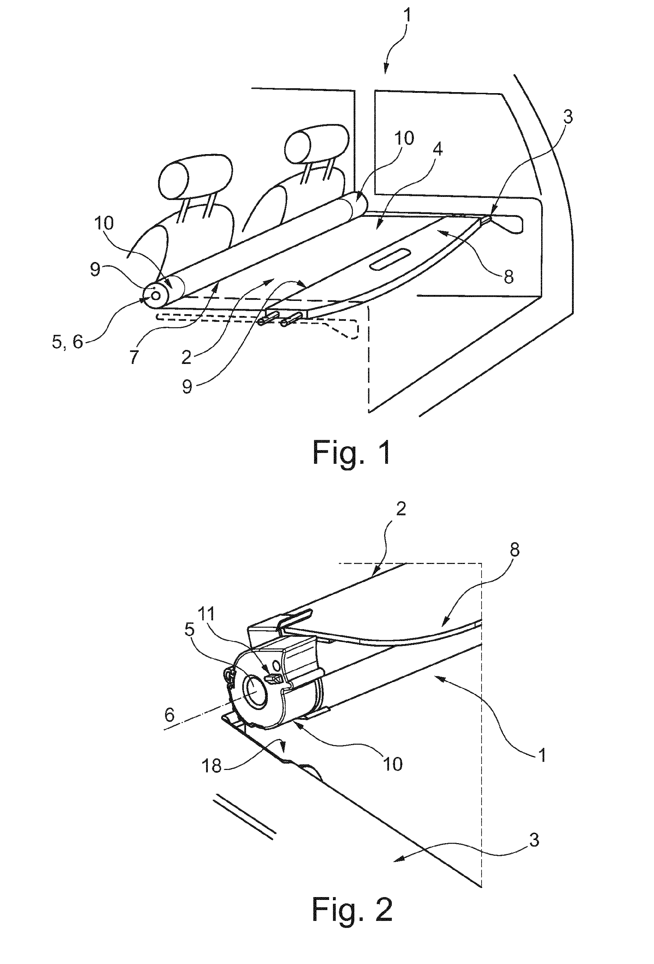

- la figure 1 est une vue schématique en perspective d'un système selon une réalisation, ledit système étant disposé dans son environnement véhicule, le rideau étant en cours de déploiement,
- la figure 2 est une vue de détail du système de la figure 1, le cache bagages étant démonté des supports, les doigts étant en position déployée et le rideau étant en configuration escamotée,
- la figure 3 est une vue de détail du cache bagages de la figure 1, ledit cache bagages étant monté sur les supports, non représentés, les doigts étant en position rétractée et le rideau étant en cours de déploiement,
- les figures 4 sont des vues schématiques partielles d'un cache bagages (4a) et d'un support (4b) d'un système selon une variante de réalisation,
- les figures 5 sont des vues en coupe d'une partie latérale du système des figures 4, un embout étant représenté en cours de montage (5a) sur le support correspondant et une fois monté (5b).

En référence aux figures, on décrit un système 1 de recouvrement d'un compartiment à bagages de véhicule automobile, ledit système comprenant un cache bagages 2 et deux supports latéraux 3 solidaires dudit compartiment, ledit cache bagages comprenant :
- un rideau 4 de masquage des bagages actionnable entre une configuration déployée et une configuration escamotée,
- un arbre 5 d'enroulement, selon un axe 6 transversal, dudit rideau en configuration escamotée, ledit arbre étant solidaire d'un bord avant 7 dudit rideau et étant couplé à un ressort, non visible sur les figures, l'actionnant en enroulement,
- une bavette 8 de rigidification d'un bord arrière 9 dudit rideau,
- deux embouts latéraux 10 sur lesquels les extrémités dudit arbre sont montées en rotation,
- deux doigts 11 transversaux coulissants de verrouillage de ladite bavette montés chacun sur un embout 10 respectif, lesdits doigts étant actionnables entre une position rétractée, obtenue par leur appui desdits doigts sur lesdits supports après insertion desdits embouts dans des logements de montage 18 prévus sur lesdits supports, et une position déployée, obtenue par retrait desdits embouts desdits logements, lesdits doigts étant actionnés vers leur position déployée par deux moyens ressort 23 respectifs,
- un moyen de verrouillage 12 prévu sur chaque bord latéral de ladite bavette,
- un moyen de verrouillage complémentaire 13 prévu en extrémité interne 14 de chacun desdits doigts, lesdits moyens de verrouillage entrant en coopération entre eux par mise desdits doigts en position déployée pour verrouiller ladite bavette sur lesdits embouts,
chacun desdits supports étant pourvu d'un logement annexe 15 de réception de l'extrémité externe 16 d'un doigt 11, lorsque lesdits embouts sont montés dans lesdits logements de montage, afin de réaliser un verrouillage desdits embouts sur lesdits supports.

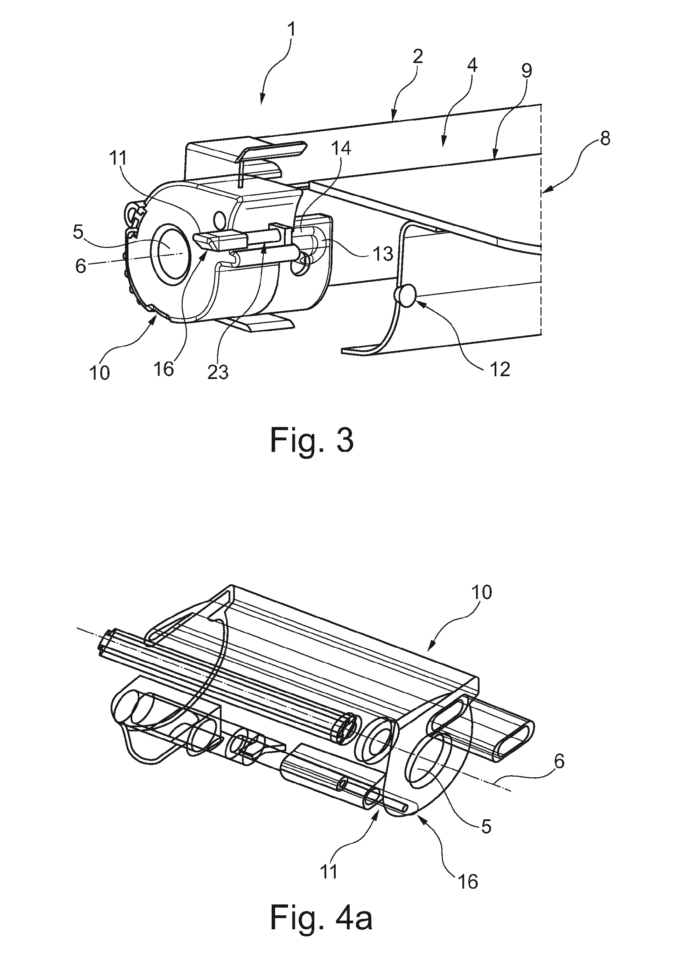

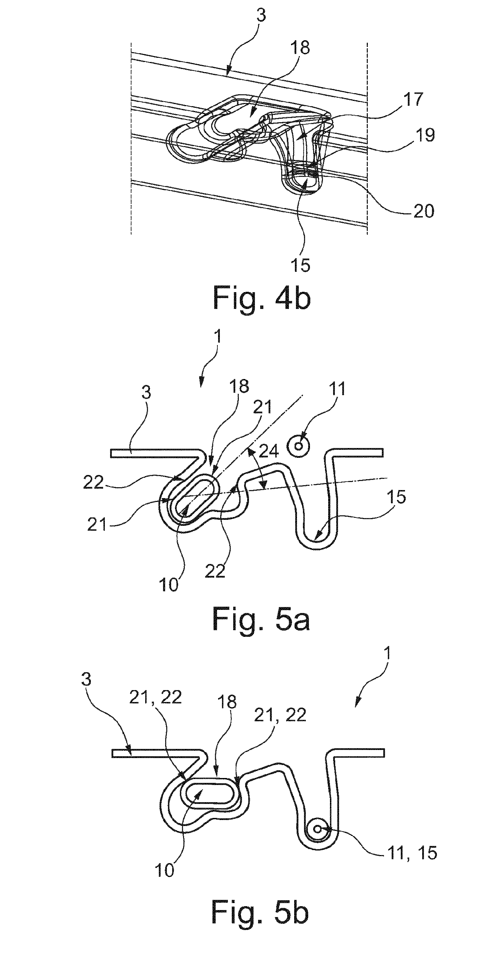

Comme représenté sur la figure 4b, les supports 3 sont pourvus d'un pan incliné 17 de rétraction progressive du doigt 11 correspondant à mesure de l'introduction d'un embout 10 dans son logement de montage 18, lesdits pans étant pourvus en leur extrémité inférieure d'une butée annexe 19 - ici sous forme de bossage - de retenue desdits doigts, ladite butée formant la limite supérieure du logement annexe 15, de manière à verrouiller lesdits embouts une fois montés.

Selon la réalisation représentée, la butée annexe 19 présente une pente 20 agencée pour permettre une extraction du doigt 11 correspondant par déplacement dudit doigt vers le haut, ceci par « effet de coulisseau ».

Comme illustré en figures 5a et 5b, les embouts 10 sont pourvus de butées 21, les logements de montage 18 étant pourvu de butées réciproques 22, lesdites butées et butées réciproques étant respectivement agencées de manière à :
- coopérer entre elles, de façon à empêcher un retrait desdits embouts desdits logements, lorsque lesdits embouts sont dans une première position angulaire,
- ne plus coopérer entre elles, de façon à permettre un retrait desdits embouts desdits logements, lorsque lesdits embouts sont dans une deuxième position angulaire.

Selon une réalisation, l'écart 24 entre les première et deuxième positions angulaires est compris entre 30 et 60°, comme visualisé en figures 5a,5b.

Selon la réalisation représentée, les doigts 11 sont disposés en arrière des embouts 10, de sorte que le montage desdits embouts dans les logements 18 se fasse par une rotation dans le sens horaire lorsque le système 1 est observé en vue latérale par la gauche (figures 5a et 5b).

Avec un tel agencement, l'utilisateur peut démonter le cache bagages 2 par simple soulèvement de la bavette 8 entraînant la rotation des embouts 10.

Comme représenté en figure 3, les moyens de verrouillage 12 sont sous forme d'orifices disposés en parties latérales de la bavette 8, les moyens de verrouillage complémentaires 13 étant sous forme de crochets s'insérant dans lesdits orifices pour réaliser le verrouillage.

On décrit à présent un cache bagages 2 d'un tel système 1, ledit cache bagages comprenant :
- un rideau 4 de masquage des bagages actionnable entre une configuration déployée et une configuration escamotée,
- un arbre 5 d'enroulement, selon un axe 6 transversal, dudit rideau en configuration escamotée, ledit arbre étant solidaire d'un bord avant 7 dudit rideau et étant couplé à un moyen ressort l'actionnant en enroulement,
- une bavette 8 de rigidification d'un bord arrière 9 dudit rideau,
- deux embouts latéraux 10 sur lesquels les extrémités dudit arbre sont montées en rotation,
- deux doigts 11 transversaux coulissants de verrouillage montés chacun sur un embout 10 respectif, lesdits doigts étant actionnables entre une position rétractée et une position déployée, lesdits doigts étant actionnés vers leur position déployée par deux moyens ressort 23 respectifs,
- un moyen de verrouillage 12 prévu sur chaque bord latéral de ladite bavette,
- un moyen de verrouillage complémentaire 13 prévu en extrémité interne 14 de chacun desdits doigts, lesdits moyens de verrouillage entrant en coopération par mise desdits doigts en position déployée.

## Revendications

1. Système (1) de recouvrement d'un compartiment à bagages de véhicule automobile, ledit système comprenant un cache bagages (2) et deux supports (3) latéraux solidaires dudit compartiment, ledit cache bagages comprenant :
• un rideau (4) de masquage des bagages actionnable entre une configuration déployée et une configuration escamotée,
• un arbre (5) d'enroulement, selon un axe (6) transversal, dudit rideau en configuration escamotée, ledit arbre étant solidaire d'un bord avant (7) dudit rideau et étant couplé à un ressort l'actionnant en enroulement,
• une bavette (8) de rigidification d'un bord arrière (9) dudit rideau,
• deux embouts (10) latéraux sur lesquels les extrémités dudit arbre sont montées en rotation,
• deux doigts (11) transversaux coulissants de verrouillage de ladite bavette montés chacun sur un embout (10) respectif, lesdits doigts étant actionnables entre une position rétractée, obtenue par appui desdits doigts sur lesdits supports après insertion desdits embouts dans des logements de montage (18) prévus sur lesdits supports, et une position déployée, obtenue par retrait desdits embouts desdits logements, lesdits doigts étant actionnés vers leur position déployée par deux moyens ressort (23) respectifs,
• un moyen de verrouillage (12) prévu sur chaque bord latéral de ladite bavette,
• un moyen de verrouillage complémentaire (13) prévu en extrémité interne (14) de chacun desdits doigts, lesdits moyens de verrouillage entrant en coopération entre eux par mise desdits doigts en position déployée pour verrouiller ladite bavette sur lesdits embouts,
ledit système étant **caractérisé en ce que** chacun desdits supports est pourvu d'un logement annexe (15) de réception de l'extrémité externe (16) d'un doigt (11), lorsque lesdits embouts sont montés dans lesdits logements de montage, afin de réaliser un verrouillage desdits embouts sur lesdits supports.

2. Système selon la revendication 1, **caractérisé en ce que** les supports (3) sont pourvus d'un pan incliné (17) de rétraction progressive du doigt correspondant à mesure de l'introduction d'un embout (10) dans son logement de montage (18), lesdits pans étant pourvus en leur extrémité inférieure d'une butée annexe (19) de retenue desdits doigts, ladite butée formant la limite supérieure du logement annexe (15), de manière à verrouiller lesdits embouts une fois montés.

3. Système selon la revendication 2, **caractérisé en ce que** la butée annexe (19) présente une pente (20) agencée pour permettre une extraction du doigt (11) correspondant par déplacement dudit doigt vers le haut.

4. Système selon l'une quelconque des revendications 1 à 3, **caractérisé en ce que** les embouts (10) sont pourvus de butées (21), les logements de montage (18) étant pourvu de butées réciproques (22), lesdites butées et butées réciproques étant respectivement agencées de manière à :
• coopérer entre elles, de façon à empêcher un retrait desdits embouts desdits logements, lorsque lesdits embouts sont dans une première position angulaire,
• ne plus coopérer entre elles, de façon à permettre un retrait desdits embouts desdits logements, lorsque lesdits embouts sont dans une deuxième position angulaire.

5. Système selon la revendication 4, **caractérisé en ce que** l'écart (24) entre les première et deuxième positions angulaires est compris entre 30 et 60°.

6. Système selon la revendication 4 ou 5, **caractérisé en ce que** les doigts (11) sont disposé en arrière des embouts (10), de sorte que le montage desdits embouts dans les logements (18) se fasse par une rotation dans le sens horaire lorsque ledit système est observé en vue latérale par la gauche.

7. Système selon l'une quelconque des revendications 1 à 6, **caractérisé en ce que** les moyens de verrouillage (12) sont sous forme d'orifices disposés en parties latérales de la bavette (8), les moyens de verrouillage complémentaires (13) étant sous forme de crochets s'insérant dans lesdits orifices pour réaliser le verrouillage.

8. Cache bagages (2) d'un système selon l'une quelconque des revendications 1 à 7, ledit cache bagages comprenant :
• un rideau (4) de masquage des bagages actionnable entre une configuration déployée et une configuration escamotée,
• un arbre (5) d'enroulement, selon un axe (6) transversal, dudit rideau en configuration escamotée, ledit arbre étant solidaire d'un bord avant (7) dudit rideau et étant couplé à un moyen ressort l'actionnant en enroulement,
• une bavette (8) de rigidification d'un bord arrière (9) dudit rideau,
• deux embouts (10) latéraux sur lesquels les extrémités dudit arbre sont montées en rotation,
• deux doigts (11) transversaux coulissants de verrouillage montés chacun sur un embout (10) respectif, lesdits doigts étant actionnables entre une position rétractée et une position déployée, lesdits doigts étant actionnés vers leur position déployée par deux moyens ressort (23) respectifs,
• un moyen de verrouillage (12) prévu sur chaque bord latéral de ladite bavette,
• un moyen de verrouillage complémentaire (13) prévu en extrémité interne (14) de chacun desdits doigts, lesdits moyens de verrouillage entrant en coopération par mise desdits doigts en position déployée.
